(19)

Europäisches Patentamt

European Patent Office

Office européen des brevets

(11) **EP 2 456 207 A2**

(12) **EUROPEAN PATENT APPLICATION**

(43) Date of publication:
**23.05.2012 Bulletin 2012/21**

(51) Int Cl.:
**H04N 9/31** *(2006.01)*

(21) Application number: **11189256.8**

(22) Date of filing: **15.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.11.2010 JP 2010256278**

(71) Applicant: **Samsung Electronics Co., Ltd.**
**Suwon-si, Gyeonggi-do 442-742 (KR)**

(72) Inventors:
• **Konuma, Osamu**
**Yokohama, 230-0027 (JP)**
• **Sasaki, Katsutoshi**
**Yokohama, 230-0027 (JP)**
• **Yokote, Yoshihiro**
**Yokohama, 230-0027 (JP)**

(74) Representative: **Waddington, Richard**
**Appleyard Lees**
**15 Clare Road**
**Halifax, Yorkshire HX1 2HY (GB)**

(54) **Projection optical system and image projection device employing the same**

(57)     Provided is a projection optical system for an ultra-short focus image projection device. The disclosed projection optical system includes a first optical system for zooming an image formed by an image display device to form a first intermediate image, a second optical system for enlarging the first intermediate image to form a second intermediate image, and a reflection optical system for reflecting light which forms the second intermediate image. An optical axis of the first optical system translates parallel with respect to an optical axis of the second optical system in a direction perpendicular to the optical axis of the first optical system.

FIG. 2

EP 2 456 207 A2

**Description**

BACKGROUND OF THE INVENTION

1. Field of the Invention

The present invention relates to a projection optical system and an image projection device employing the projection optical system, and more particularly, to a projection optical system and an image projection device which allow a large screen to be projected with a short projection distance.

2. Description of the Related Art

Recently, an image projection device (ultra-short focus image projection device) capable of projecting a large screen in spite of a short projection distance has been developed. Since the ultra-short focus image projection device can reduce a distance to a screen, it is easy to install and handle, and it is also useful because there are not frequent occasions when an image cannot be seen due to pass of a person between the screen and the image projection device. In addition, an ultra-short focus image projection device having a zoom function has recently been developed.

However, it is difficult that the ultra-short focus image projection device, due to its ultra-short focal length, designs to simultaneously achieve both high zoom rate and large viewing angle, and experiences a large performance change caused by an assembly error occurring in manufacturing. Consequently, in the ultra-short imaging projection device, a reflecting optical system which does not cause chromatic aberration as well as a refracting optical system is used to solve those problems.

When the reflecting optical system is used, however, a reflection surface is disposed to protrude in the direction of projecting flux and thus may disturb observation of a projection surface. Moreover, in case of shift from a wide-angle end to a telephoto end, the position of a projection screen moves up and down, making it difficult for a user to use the reflecting optical system.

SUMMARY OF THE INVENTION

The present invention provides a projection optical system for an ultra-short focus image projection device, in which a reflection optical system does not disturb observation of a projection surface, and an image projection device employing the projection optical system.

According to the present invention there is provided an apparatus and method as set forth in the appended claims. Other features of the invention will be apparent from the dependent claims, and the description which follows.

According to an aspect of the present invention, there is provided a projection optical system including a first optical system for zooming an image formed by an image display device to form a first intermediate image, a second optical system for enlarging the first intermediate image to form a second intermediate image, and a reflection optical system for reflecting light which forms the second intermediate image, in which an optical axis of the first optical system translates parallel with respect to an optical axis of the second optical system in a direction perpendicular to the optical axis of the first optical system.

The optical axis of the first optical system may coincide with a central normal of the image display device.

The optical axis of the first optical system may pass through an inside or vicinity of the image display device.

According to another aspect of the present invention, there is provided a projection optical system including a first optical system for zooming an image formed by an image display device to form a first intermediate image, a second optical system for enlarging the first intermediate image to form a second intermediate image, and a reflection optical system for reflecting light which forms the second intermediate image, in which an optical axis of the first optical system and an optical axis of the second optical system are approximately on the same straight line.

A central normal of the image display device may translate parallel with respect to an optical axis of the first optical system in a direction perpendicular to the optical axis of the first optical system.

According to another aspect of the present invention, there is provided a projection optical system including a first optical system for zooming an image formed by an image display device to form a first intermediate image, a second optical system for enlarging the first intermediate image to form a second intermediate image, a reflection optical system for reflecting light which forms the second intermediate image, and a plane mirror for reflecting light emitted from the first optical system and causing the reflected light to be incident to the second optical system.

The reflection optical system may include a concave mirror.

An aberration of the first optical system and an aberration of the second optical system and the reflection optical system including the concave mirror may be offset.

The first optical system may be an enlarging/zooming optical system.

An image projection device according to an embodiment of the present invention includes a projection optical system having any one of the foregoing characteristics.

With the projection optical system and the image projection device employing the projection optical system according to an embodiment of the present invention, by using the concave mirror for the reflection optical system, observation of the projection surface can be prevented from being disturbed due to the reflection optical system. Moreover, the lower side or center of the projection screen may not be moved in zooming. Furthermore, by combining the plurality of optical systems, performance change originating from an assembly error occurring in manufacturing can be reduced.

BRIEF DESCRIPTION OF THE DRAWINGS

The above and other features and advantages of the present invention will become more apparent by describing in detail exemplary embodiments thereof with reference to the attached drawings in which:

FIGS. 1A through 1C are diagrams showing a use state of an image projection device using a projection optical system according to an embodiment of the present invention;

FIG. 2 is a structural diagram of a projection optical system according to an embodiment of the present invention;

FIG. 3 is a diagram showing a use state of an image projection device using a projection optical system according to an embodiment of the present invention, which is viewed in front of a screen;

FIG. 4A is a detailed diagram of a lens structure of a projection optical system according to an embodiment of the present invention;

FIG. 4B is a diagram showing a state of lens movement occurring in shift from a wide-angle end to a telephoto end in a projection optical system according to an embodiment of the present invention;

FIG. 5 is a structural diagram of all lenses of a projection optical system according to an embodiment of the present invention;

FIG. 6 is a spot diagram at a wavelength of 520nm on a screen surface in a projection optical system according to an embodiment of the present invention;

FIG. 7 is a diagram showing a distortion aberration in a projection optical system according to an embodiment of the present invention;

FIG. 8 is a structural diagram of a projection optical system according to another embodiment of the present invention;

FIG. 9 is a structural diagram of all lenses of a projection optical system according to another embodiment of the present invention;

FIG. 10 is a structural diagram of a projection optical system according to another embodiment of the present invention;

FIG. 11 is a diagram showing a use state of an image projection device using a projection optical system according to another embodiment of the present invention, which is viewed in front of a screen;

FIG. 12 is a structural diagram of a projection optical system according to another embodiment of the present invention;

FIG. 13A is a detailed diagram of a lens structure of a projection optical system according to another embodiment of the present invention;

FIG. 13B is a diagram showing a state of lens movement occurring in shift from a wide-angle end to a telephoto end in a projection optical system according to another embodiment of the present invention;

FIG. 14 is a structural diagram of all lenses of a projection optical system according to another embodiment of the present invention;

FIG. 15 is a spot diagram at a wavelength of 520nm on a screen surface in a projection optical system according to another embodiment of the present invention; and

FIG. 16 is a diagram showing a distortion aberration in a projection optical system according to an embodiment of the present invention.

DETAILED DESCRIPTION OF THE INVENTION

Hereinafter, a projection optical system and an image projection device employing the projection optical system according to various embodiments of the present invention will be described in detail with reference to the accompanying drawings. However, embodiments of the present invention are not limited to the disclosed embodiments and may be carried out with various modifications thereto.

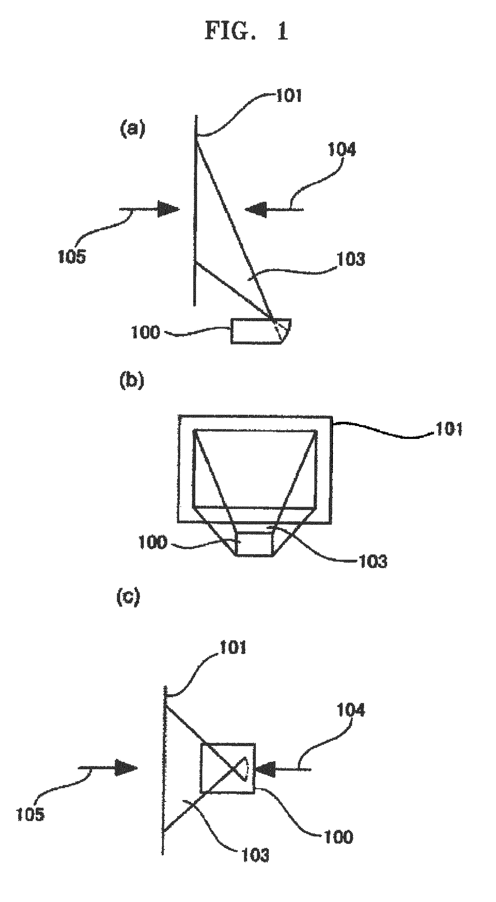

FIGS. 1A through 1C are diagrams showing a use state of an image projection device 100 using a projection optical system according to an embodiment of the present invention. FIG. 1A is a diagram of a use state viewed from a side, FIG. 1B is a diagram of the use state viewed from front, and FIG. 1C is a diagram of the use state viewed from above. The image projection device 100 is disposed in the vicinity of a screen 101. In FIG. 1A, the image projection device 100 is disposed under the screen 101, but it may also be disposed to the left of, to the right of, or above the screen 101. The image projection device 100 obliquely projects light 103 toward the screen 101. When the screen 101 is a reflection screen, an image projected onto the screen 101 may be seen in a direction 104. When the screen 101 is a transmission screen, an image projected onto the screen 101 may be seen in a direction 105.

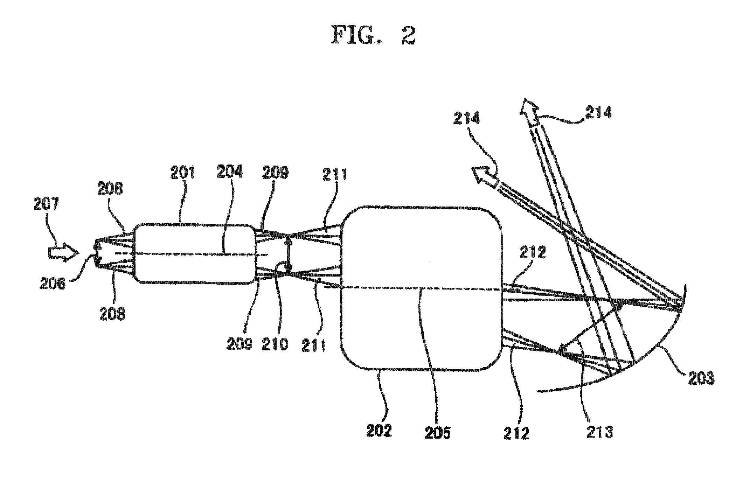

FIG. 2 is a structural diagram of a projection optical system according to an embodiment of the present invention. The projection optical system includes a first optical system 201, a second optical system 202, and a reflection optical system 203.

The first optical system 201 is a refractive optical system which has an optical axis 204 and includes a plurality of refractive lenses having a zooming function. That is, incident light 207 incident into the first optical system 201 penetrates an image display device such as a liquid crystal panel or the like, the plurality of refractive lenses which refract light 208 of an image 206 formed by the image display device are moved in the direction of the optical axis 204, thereby changing a size of a first intermediate image 210 generated by imaging of projection light 209 from the first optical system 201. Herein, the image display device is not limited to a liquid crystal panel and may use various components such as a Digital Micromirror Device (DMD), etc.

The second optical system 202 is a refractive optical system which has an optical axis 205 and includes a plurality of refractive lenses. Once light 211 forming the first intermediate image 210 is incident, the second optical system 202 performs enlargement for projecting an image presented by the first intermediate image 210 onto a screen. Thus, light 212 projected by the second optical system 202 forms a second intermediate image 213.

The reflection optical system 203 enlarges the second intermediate image 213 and projects the enlarged second intermediate image 213 onto the screen. As the reflection optical system 203, a concave mirror may be used as shown in FIG. 2. By using the concave mirror, light is projected in an inclined upward direction 214 as shown in FIG. 2, thereby preventing observation of the screen from being disturbed.

The reflection optical system 203 may be provided to offset aberration (spherical aberration, coma aberration, astigmatism, field curvature, distortion, etc.) generated in the reflection optical system 203 by aberration generated in the refractive optical system of the second optical system 202. The reflection optical system 203 may have an aspheric shape for aberration correction.

In the current embodiment, the optical axis 204 and the optical axis 205 are approximately parallel with each other, but do not coincide with each other. That is, when the projection optical system is viewed from a side as shown in FIG. 2, the optical axis 204 and the optical axis 205 are approximately parallel with each other. The optical axis 204 has a positional relationship with respect to the optical axis 205 such that the optical axis 204 translates parallel in a direction perpendicular to the optical axis 204. Through this positional relationship, projection toward the screen may be possible in an inclined upward direction.

In the current embodiment, a normal at a central position of the image display device which forms an image 206 (i.e., a central normal) approximately coincides with the optical axis 204 of the first optical system 201. Consequently, the first intermediate image 210 is zoomed with respect to the optical axis 204 of the first optical system 201. Therefore, it is possible to prevent the center of a projection image from being moved due to zooming on the screen.

Herein, "central position of the image display device which forms the image 206" means a central position of a shape formed by collection of pixels valid for formation of the image 206.

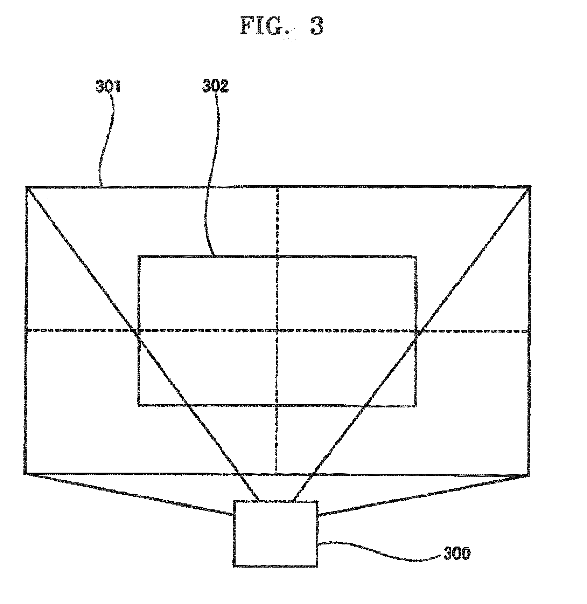

FIG. 3 is a diagram of a use state of the image projection device using the projection optical system according to an embodiment of the present invention, which is viewed in front of the screen. A frame 301 indicates the vicinity of a projection image when the projection optical system is a wide-angle end, and a frame 302 indicates the vicinity of a projection image when the projection optical system is a telephoto end. As shown in FIG. 3, central positions of the frame 301 and the frame 302 approximately coincide with each other.

Moreover, in FIG. 3, an image projection device 300 is disposed on a plane which divides a projection image into 2 parts vertically and is perpendicular to the screen. This is one of reasons why the optical axis 204 translates parallel with respect to the optical axis 205 in a direction perpendicular to the optical axis 204. However, the current embodiment is not limited to this example, and the optical axis 204 may translate parallel with respect to the optical axis 205 in an arbitrary direction. Consequently, the image projection device 300 may be disposed at an arbitrary position on a plane which divides a projection image into 2 parts vertically and is perpendicular to the screen.

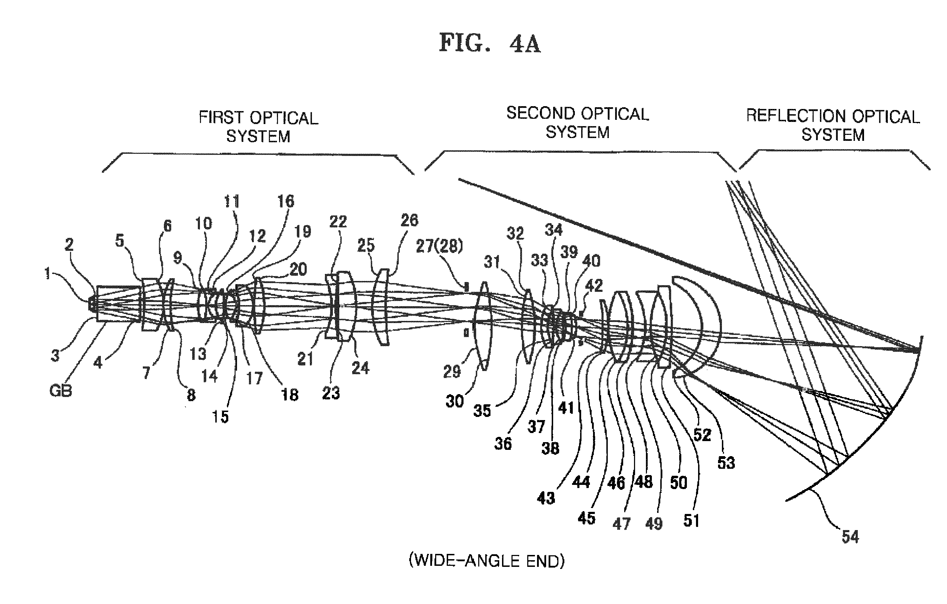

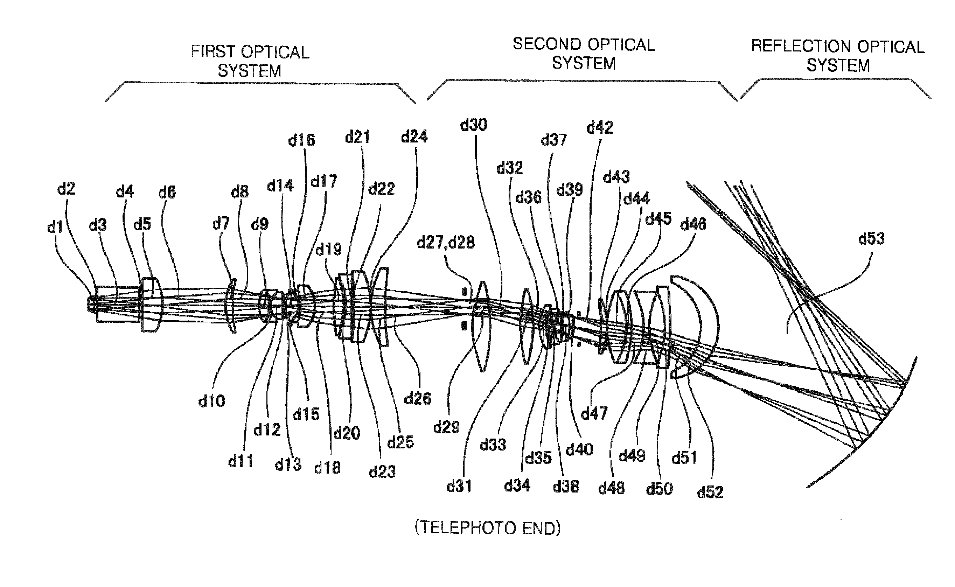

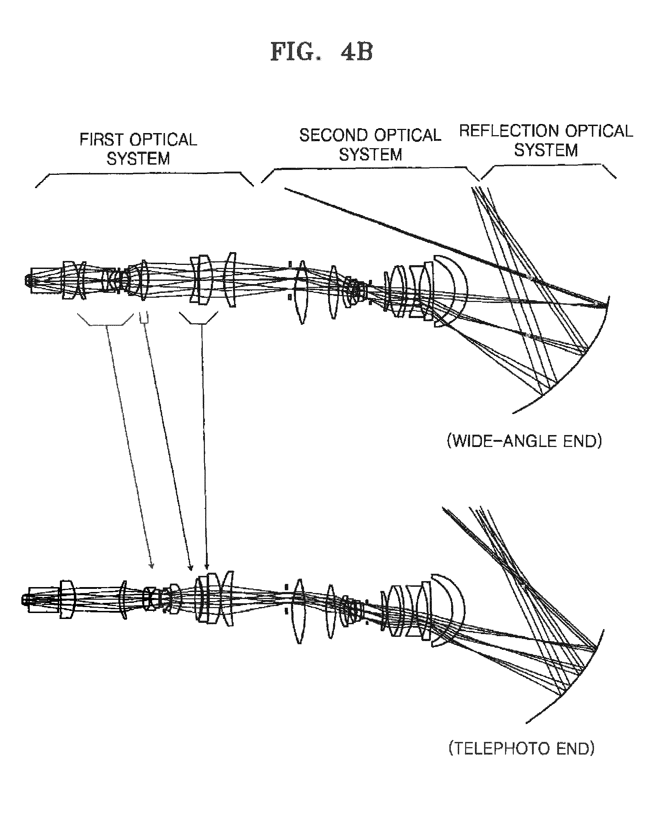

FIG. 4A is a detailed diagram of a lens structure in a projection optical system according to an embodiment of the present invention. In FIG. 4A, an upper portion shows a lens structure in a wide-angle end and a lower portion shows a lens structure in a telephoto end. FIG. 4B shows a state of lens movement occurring in shift from the wide-angle end to the telephoto end, by using arrows between the lens structure in the wide-angle end and the lens structure in the telephoto end. As shown in FIG. 4B, in shift between the wide-angle end and the telephoto end, several refractive lenses of the first optical system move, whereas no refractive lens of the second optical system moves.

In the lens structure of the wide-angle end in the upper portion in FIG. 4A, GB indicates a glass block such as a dichroic mirror. In FIG. 4A, a liquid crystal display device is disposed to the left of the glass block GB, and parallel light is incident from the left side of the liquid crystal display device to form an image.

In the lens structure in the wide-angle end shown in FIG. 4A, all surfaces are indicated surface numbers in which the left surface of the liquid crystal display device is a first surface (indicated by a surface number 1). Surface numbers 13, 27, 28, and 42 are added to apertures. The surface numbers 27 and 28 are added to the same aperture. In FIG. 4A, in the lens structure in the telephoto end, a position of an interval di between surfaces is also indicated, in which i is 1, 2, ..., 53.

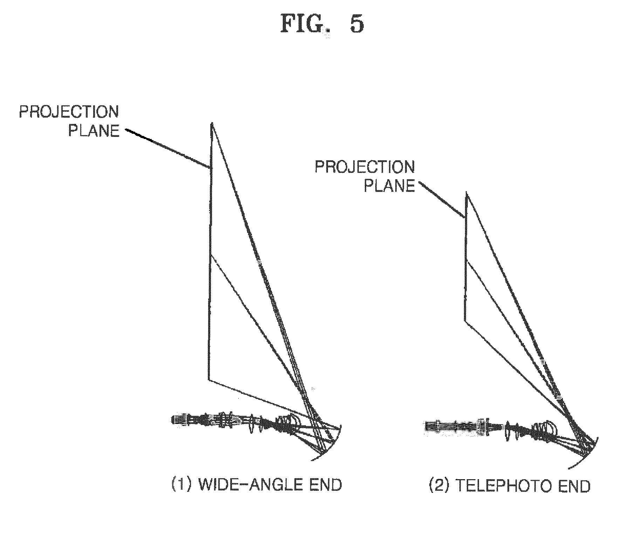

FIG. 5 is a diagram showing all lenses, including a projection surface of a screen in a projection optical system according to an embodiment of the present invention. (1) of FIG. 5 shows a projection state to the projection surface of the screen in the wide-angle end, and (2) of FIG. 5 shows a projection state to the projection surface of the screen in the telephoto end.

Shown in Table 1 and Table 2 are (1) indication of whether each lens surface is aspheric, (2) a radius of curvature of each lens surface, (3) a distance, (4) a d-line refractive index, and (5) an Abbe number. The following values comply with specifications of the projection optical system in which a focal length f is more than 4.3mm and less than 8.6mm, an F number is more than 1.5 and less than 3.0, a viewing angle in the wide-angle end is 75.1°, surfaces following a twenty-eighth surface 28 are eccentrically shifted by 15.4mm (move in perpendicular to the optical axis).

[Table 1]

| Surface No. i | Aspheric | Radius of Curvature Ri | Distance Di | d-line Refractive Index Ni | Abbe Number Abbe νi |
|---|---|---|---|---|---|
| 1 | | ∞ | 4.000 | | |
| 2 | | ∞ | 2.300 | 1.4584 | 67.8 |
| 3 | | ∞ | 34.000 | 1.5163 | 64.1 |
| 4 | | ∞ | 3.500 | | |
| 5 | | -133.301 | 15.000 | 1.8061 | 33.3 |
| 6 | | -43.951 | Vanable | | |
| 7 | | 39.578 | 5.647 | 1.8467 | 23.8 |
| 8 | | 85.811 | 22.234 | | |
| 9 | | 35.769 | 6.963 | 1.7292 | 54.7 |
| 10 | | -38.408 | 1.500 | 1.7408 | 27.8 |
| 11 | | 13.195 | 9.065 | 1.7292 | 54.7 |
| 12 | | 165.204 | 0.804 | | |
| 13 | | ∞ | 0.692 | | |
| 14 | Aspheric | -255.805 | 1.500 | 1.8061 | 33.3 |
| 15 | Aspheric | 25.434 | 10.729 | | |
| 16 | | -14.248 | 1.694 | 1.7408 | 27.8 |
| 17 | | -48.053 | 11.384 | 1.8052 | 25.5 |
| 18 | | -25.064 | Vanable | | |
| 19 | | 149.775 | 8.2000 | 1.7433 | 49.2 |
| 20 | | -60.785 | Vanable | | |
| 21 | | -54.738 | 3.931 | 1.7408 | 27.8 |
| 22 | | 442.351 | 1.595 | | |
| 23 | | -490.464 | 15.000 | 1.8467 | 23.8 |
| 24 | | -67.289 | Vanable | | |
| 25 | Aspheric | 62.711 | 11.231 | 1.5310 | 56.0 |
| 26 | Aspheric | 211.241 | 30.779 | | |
| 27 | | ∞ | 35.000 | | |

[Table 2]

| | | | | | |
|---|---|---|---|---|---|
| 28 (Eccentric) | | | ∞ | 5.000 | |
| 29 | | Aspheric | 45.859 | 14.550 | 1.5310 | 56.0 |
| 30 | | | -126.559 | 25.128 | |
| 31 | | | 120.780 | 10.168 | 1.7292 | 54.7 |
| 32 | | | -101.936 | 5.381 | |

(continued)

| | | | | | |
|---|---|---|---|---|---|
| 33 | | 33.240 | 5.611 | 1.7292 | 54.7 |
| 34 | | 35.997 | 4.730 | | |
| 35 | | -82.253 | 2.000 | 1.8061 | 33.3 |
| 36 | | 23.114 | 5.113 | 1.6516 | 58.5 |
| 37 | | 284.060 | 2.108 | | |
| 38 | | -46.083 | 5.242 | 1.5163 | 64.1 |
| 39 | | -43.399 | 0.200 | | |
| 40 | Aspheric | 225.174 | 3.065 | 1.4875 | 70.2 |
| 41 | Aspheric | -40.909 | 0.717 | | |
| 42 | | ∞ | 21.067 | | |
| 43 | | -133.464 | 4.492 | 1.7130 | 53.9 |
| 44 | | -59.048 | 0.500 | | |
| 45 | | 75.634 | 15.234 | 1.7725 | 49.6 |
| 46 | | -55.856 | 4.000 | 1.8052 | 25.4 |
| 47 | | -88.527 | 9.989 | | |
| 48 | | -57.982 | 4.430 | 1.6204 | 60.3 |
| 49 | | 70.764 | 13.119 | | |
| 50 | | -65.885 | 4.000 | 1.7725 | 49.6 |
| 51 | | -285.920 | 25.000 | | |
| 52 | Aspheric | -35.132 | 15.255 | 1.5310 | 56.0 |
| 53 | Aspheric | -34.831 | 163.903 | | |
| 54 (Reflection Surface) | Aspheric | -90.475 | -530.000 | | |
| 55 | | ∞ | | | |

Table 3 shows distance data during zooming. Di indicates a distance of an interval di between a surface having a surface number i and a surface having a surface number (i+1).

[Table 3]

| Distance | Wide-Angle End | Telephoto End |
|---|---|---|
| D6 | 0.500 | 51.298 |
| D18 | 1.000 | 15.733 |
| D20 | 54.353 | 1.500 |
| D24 | 13.178 | 0.500 |

In Table 4, aspheric data is shown. When Z is a zag amount of a surface, h is a radius from an optical axis, c is curvature of a radical axis (reciprocal of a radius of curvature), and H is a size in a direction perpendicular to the optical axis, the aspheric equation may be given by:

$$Z=ch^2/(1+SQRT\{1-(1+k)c^2h^2\})+Ah^4+Bh^6+Ch^8+Dh^{10}.$$

[Table 4]

| Surface No. | 14 | Surface No. | 29 | Surface No. | 53 |
|---|---|---|---|---|---|
| Conic Constant K | 0 | Conic Constant K | -12.278 | Conic Constant K | -0.370 |
| $4^{th}$-Order Coefficient A | -9.833E-06 | $4^{th}$-Order Coefficient A | 0.00E+00 | $4^{th}$-Order Coefficient A | 1.932E-07 |
| $6^{th}$-Order Coefficient B | 1.860E-07 | $6^{th}$-Order Coefficient B | 0.00E+00 | $6^{th}$-Order Coefficient B | -3.623E-10 |
| $8^{th}$-Order Coefficient C | -1.544E-09 | $8^{th}$-Order Coefficient C | 0.00E+00 | $8^{th}$-Order Coefficient C | -8.063E-13 |

(continued)

| Surface No. | 14 | Surface No. | 29 | Surface No. | 53 |
|---|---|---|---|---|---|
| 10th-Order Coefficient D | 7.968E-12 | 10th-Order Coefficient D | 0.00E+00 | 10th-Order Coefficient D | 3.750E-16 |
| Surface No. | 15 | Surface No. | 40 | Surface No. | 54 (Reflection Surface) |
| Conic Constant K | 0 | Conic Constant K | 0 | Conic Constant K | -1.088 |
| 4th-Order Coefficient A | -6.724E-06 | 4th-Order Coefficient A | -2.134E-05 | 4th-Order Coefficient A | 6.419E-08 |
| 6th-Order Coefficient B | 2.381E-07 | 6th-Order Coefficient B | -1.616E-07 | 6th-Order Coefficient B | -6.953E-12 |
| 8th-Order Coefficient C | -2.242E-09 | 8th-Order Coefficient C | 2.534E-10 | 8th-Order Coefficient C | 2.962E-16 |
| 10th-Order Coefficient D | 1.459E-11 | 10th-Order Coefficient D | -1.040E-11 | 10th-Order Coefficient D | -8.865E-21 |
| Surface No. | 25 | Surface No. | 41 | | |
| Conic Constant K | 0.064 | Conic Constant K | 10.116 | | |
| 4th-Order Coefficient A | -1.172E-07 | 4th-Order Coefficient A | -4.425E-06 | | |
| 6th-Order Coefficient B | -6.508E-10 | 6th-Order Coefficient B | -4.326E-08 | | |
| 8th-Order Coefficient C | 6.549E-13 | 8th-Order Coefficient C | -7.509E-10 | | |
| 10th-Order Coefficient D | -5.649E-16 | 10th-Order Coefficient D | -6.198E-13 | | |
| Surface No. | 26 | Surface No. | 52 | | |
| Conic Constant K | 2.174 | Conic Constant K | -0.805 | | |
| 4th-Order Coefficient A | 1.602E-07 | 4th-Order Coefficient A | -7.579E-07 | | |
| 6th-Order Coefficient B | -9.903E-10 | 6th-Order Coefficient B | -2.939E-09 | | |
| 8th-Order Coefficient C | 1.555E-12 | 8th-Order Coefficient C | -5.462E-13 | | |
| 10th-Order Coefficient D | -1.730E-15 | 10th-Order Coefficient D | 1.550E-15 | | |

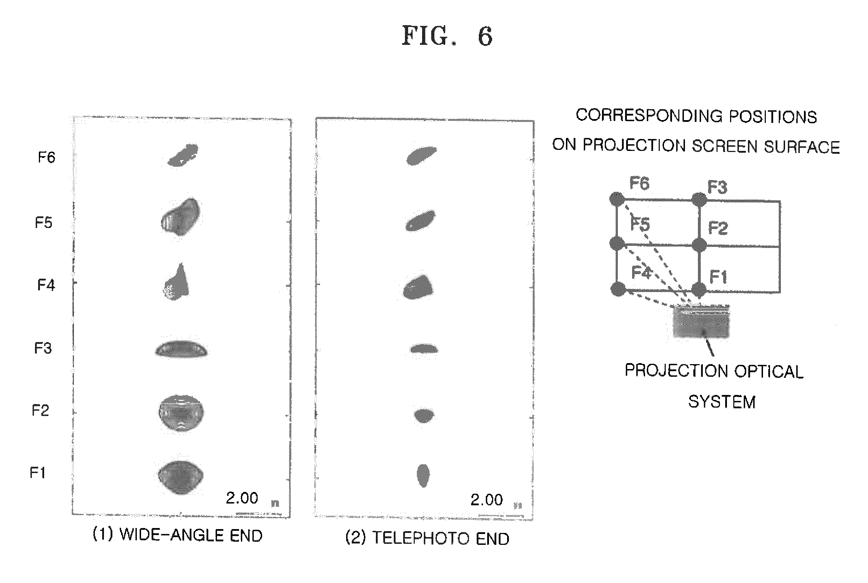

FIG. 6 is a spot diagram at a wavelength of 520nm on a screen surface in a projection optical system according to an embodiment of the present invention. In FIG. 6, the left side corresponds to the wide-angle end, and the center corresponds to the telephoto end. F1 through F6 indicate positions on the screen surface as shown in the right side of FIG. 6.

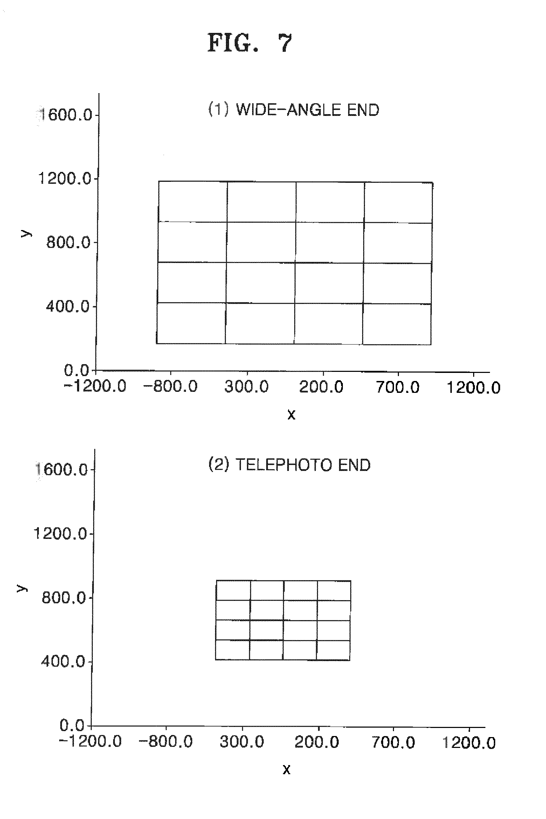

FIG. 7 is a diagram showing a distortion aberration in a projection optical system according to an embodiment of the present invention. In FIG. 7, (1) corresponds the wide-angle end and (2) corresponds to the telephoto end.

While it is described above that the optical axis 204 of the first optical system 201 and the optical axis 205 of the second optical system 202 are approximately parallel with each other, the embodiment of the present invention is not limited thereto, and a mirror may be disposed in the middle of a light path from the first optical system 201 to the second optical system 202, such that the optical axis 205 of the second optical system 202 may be approximately parallel with an optical axis which has a relationship of a mirror image with the optical axis 204 of the first optical system 201 through the mirror.

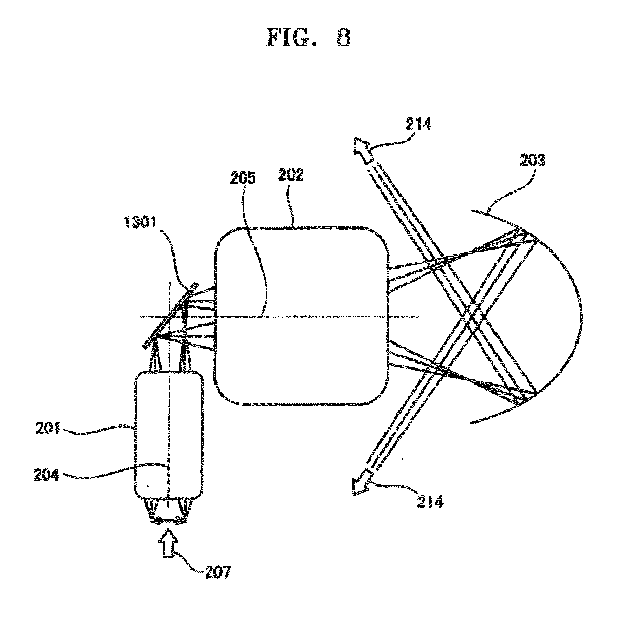

FIG. 8 is a top view of a structure using a mirror which reflects light emitted from the first optical system 201 and causes the reflected light to be incident to the second optical system 202 in a projection optical system according to another embodiment of the present invention. A plane mirror 1301 may be disposed as shown in FIG. 8. In FIG. 8, an angle between the optical axis 204 and the plane mirror 1301 is about 45°. In FIG. 8, the optical axis 204 and the optical axis 205 are approximately perpendicular to each other. As such, by disposing a mirror in the middle of a light path from the first optical system 201 to the second optical system 202, the size of the projection optical system can be reduced.

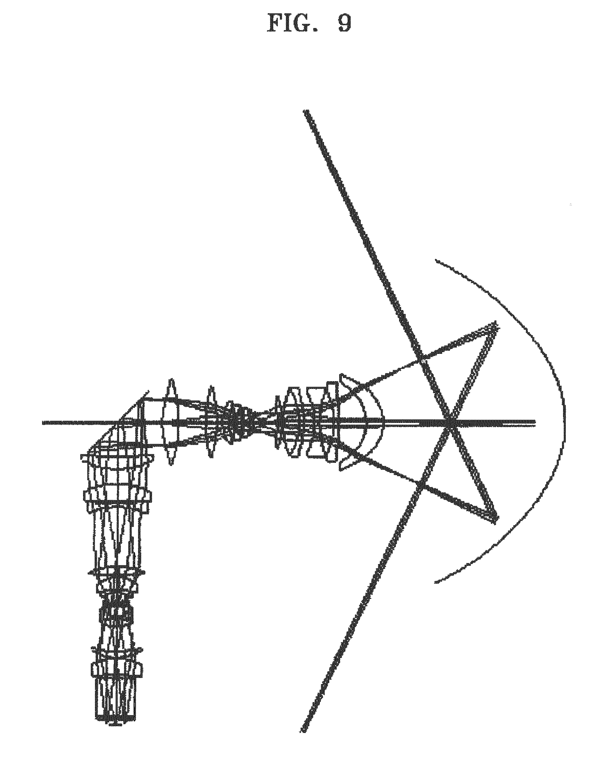

FIG. 9 is a structural diagram of lenses of the projection optical system shown in FIG. 8. FIG. 9 shows the projection optical system viewed from above to correspond to FIG. 1C. The first optical system, the second optical system, and the reflection optical system may use those shown in FIG. 4A, FIG. 4B, FIG. 5, and Table 1 through Table 4. However, the plane mirror 1301 had added thereto a surface number 27, and a surface number following the surface number 27 increases one by one in FIG. 4A, FIG. 5, and Table 1 through Table 4. Therefore, for example, a surface number of a reflection mirror is 55.

As such, in the embodiment of the present invention, a projection optical system having a high zooming rate with a large viewing angle can be obtained. On the screen surface, the center of a projection image does not move due to zooming.

As in the embodiment of the present invention, by dividing the projection optical system into an optical system (first optical system) for zooming an image and an optical system (second optical system and reflection optical system) for enlarging an intermediate image obtained from the first optical system onto the screen based on functions, designing of an ultra-short focus image projection device can be facilitated.

For example, by using the first optical system as an enlarging/zooming optical system, the F number of the second optical system may be designed to be large.

According to another embodiment of the present invention, the normal (central normal) in the central position of the image display device and the optical axis 204 of the first optical system 201 are approximately on the same straight line, such that the center of an image projected onto the screen does not move due to zooming. That is, a position in which the optical axis 204 of the first optical system 201 passes through an image formed by the image display device may not move even due to zooming.

Accordingly, by setting a position of the image display device such that the optical axis 204 of the first optical system 201 passes through the inside or vicinity of the image formed by the image display device, movement of the projected image can be easily expected when zooming is performed by adjusting the first optical system 201.

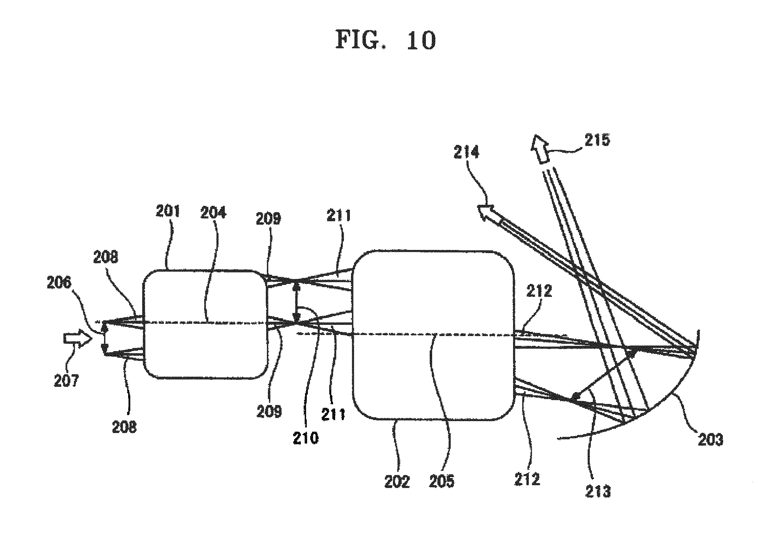

For example, as shown in FIG. 10, the optical axis 204 of the first optical system 201 may pass through the vicinity of the image display device, such that the image may have a rectangular shape. Then, in zooming, the first intermediate image 210 is zoomed using the optical axis 204 of the first optical system 201 as the base. Consequently, the lower side of the image projected onto the screen surface by the second optical system 202 and the reflection optical system 203 may not move due to zooming.

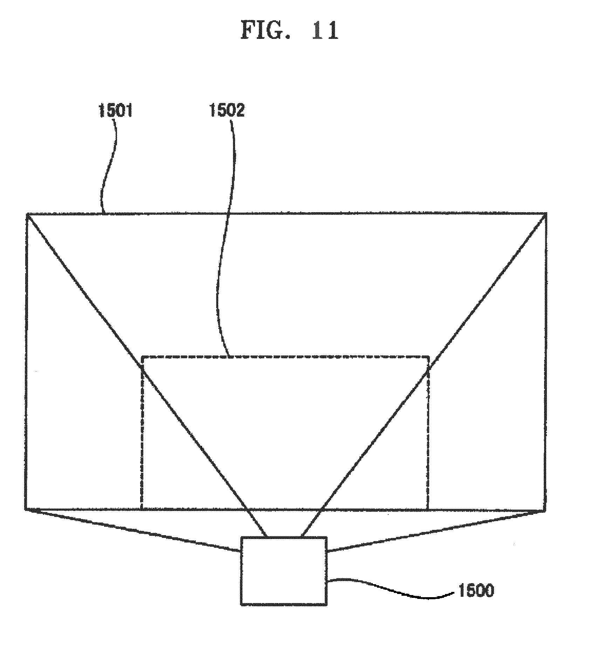

FIG. 11 is a diagram showing a use state of an image projection device using a projection optical system according to another embodiment of the present invention, which is viewed in front of a screen. A frame 1501 indicates the vicinity of a projection image when the projection optical system is a wide-angle end, and a frame 1502 indicates the vicinity of a projection image when the projection optical system is a telephoto end. As shown in FIG. 11, lower sides of the frame 301 and the frame 302 approximately coincide with each other, such that the position of the projection image after zooming can be expected, allowing image projection with superior convenience.

While a term such as 'lower', 'lower side', or the like has been used in the foregoing description, it merely indicates a relative direction. For example, when FIG. 11 is turned upside down, upper sides of the frame 1501 and the frame 1502 approximately coincide with each other. Thus, even when the image projection device is installed on an upper side of the screen and zooming is performed, the projection image can be displayed in a way to be easily seen at all times.

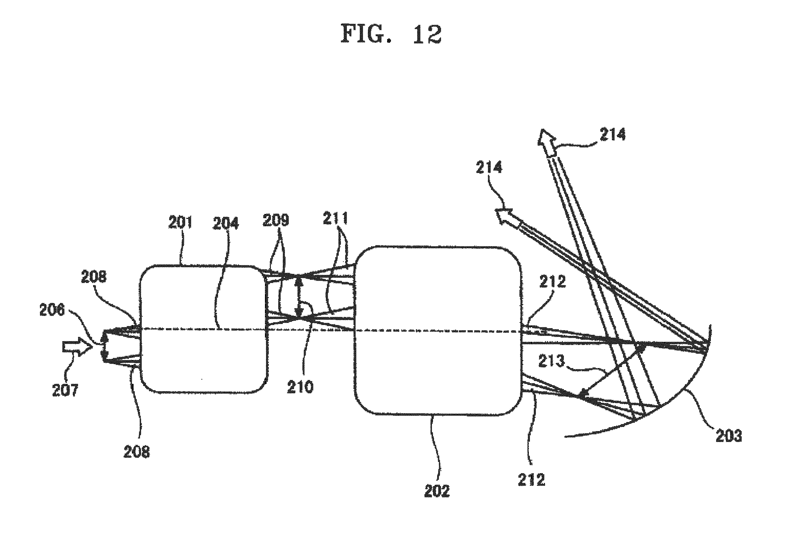

FIG. 12 is a structural diagram of a projection optical system according to another embodiment of the present invention. The structure of the projection optical system according to the current embodiment of the present invention is almost the same as the embodiment described with reference to FIG. 2, except that the optical axis of the first optical system 201 and the optical axis of the second optical system 202 approximately coincide with each other. That is, in the current embodiment of the present invention, the first optical system 201 and the second optical system 202 are structured to have the common optical axis 204.

When the first optical system 201 and the second optical system 202 have the common optical axis 204 as described above, the central normal of the image display device needs to be moved in perpendicular to the common optical axis 204 to form the projection image in an inclined upward direction. In the telephoto end, the projection image moves downward with respect to the embodiment of FIG. 2, such that interference with a refractive lens of the second optical system 202 may occur. In this case, the other area than a valid light area of the refractive lens of the second optical system 202 may be cut.

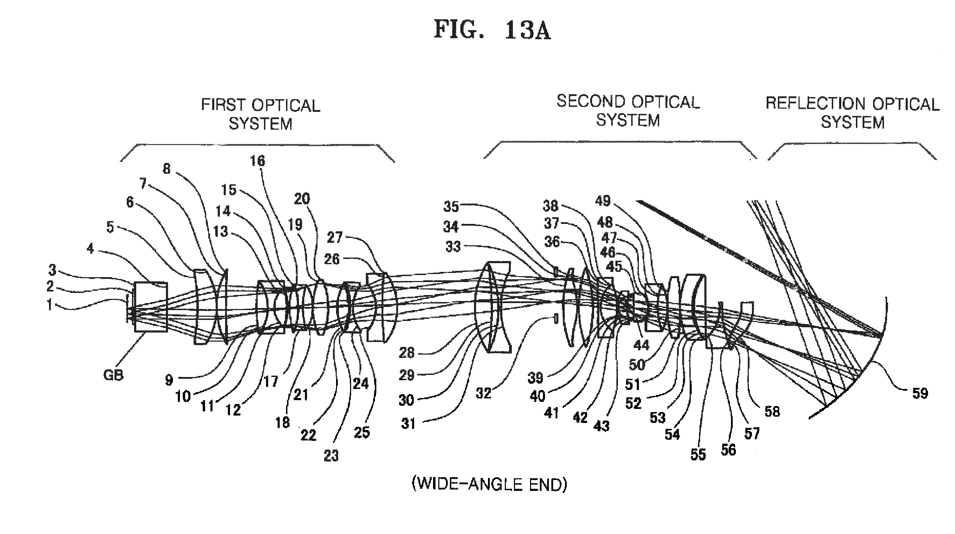

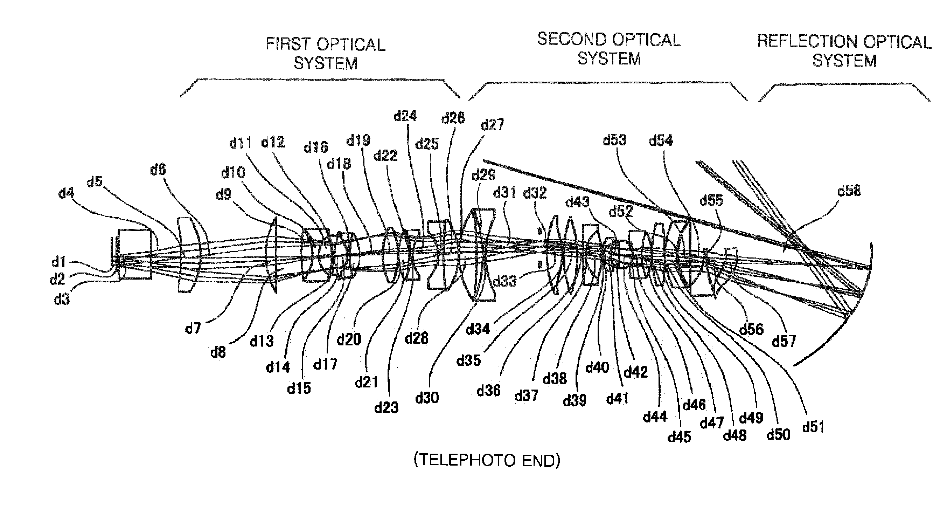

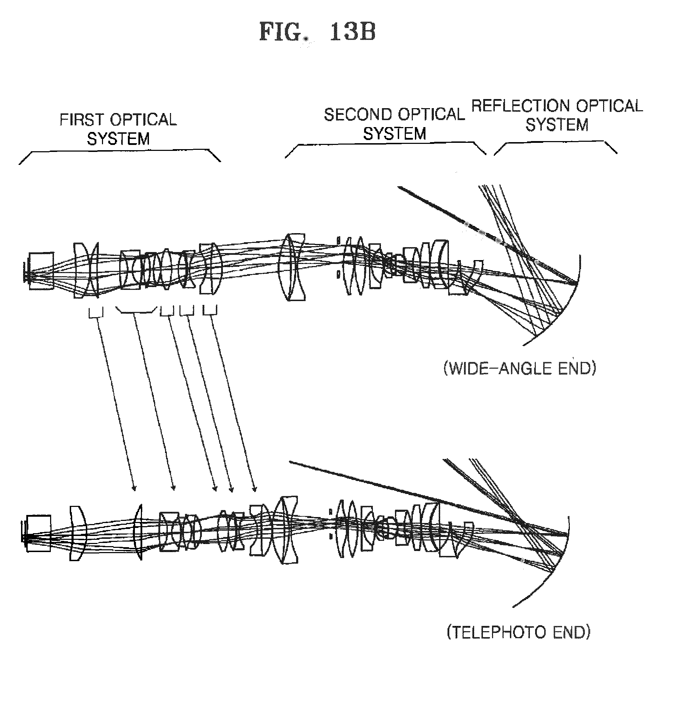

FIG. 13A is a detailed diagram of a lens structure of a projection optical system according to another embodiment of the present invention. In FIG. 13A, an upper side shows a lens structure in the wide-angle end and a lower side shows a lens structure in the telephoto end. FIG. 13B shows a state of lens movement in shift from the wide-angle end to the telephoto end, by using arrows between the lens structure in the wide-angle end and the lens structure in the telephoto end. As shown in FIG. 13B, during shift from the wide-angle end to the telephoto end, several refractive lenses of the first optical system move, whereas no refractive lens of the second optical system moves.

Moreover, in the current embodiment, the projection image interferes with the refractive lens of the second optical system 202 at the screen side in the telephoto end, such that the other area than a valid light area of the refractive lens of the second optical system 202 is cut.

In the lens structure of the wide-angle end in the upper portion in FIG. 13A, GB indicates a glass block such as a dichroic mirror. In FIG. 13A, a liquid crystal display device is disposed to the left of the glass block GB, and parallel light is incident from the left side of the liquid crystal display device to form an image.

In the lens structure in the wide-angle end shown in FIG. 13A, all surfaces are indicated surface numbers in which the left surface of the liquid crystal display device is a first surface (indicated by a surface number 1). Surface numbers 15, 32, and 43 are added to apertures. In FIG. 13A, in the lens structure in the telephoto end, a position of an interval di between surfaces is also indicated, in which i is 1, 2, ..., 58.

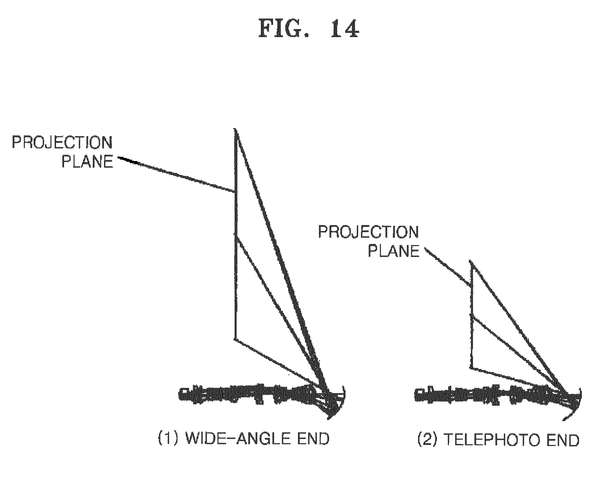

FIG. 14 is a structural diagram of all lenses of a projection optical system according to another embodiment of the present invention. In FIG. 14, (1) shows a state of projection to the projection surface of the screen in the wide-angle end and (2) shows a state of projection to the projection surface of the screen in the telephoto end.

Shown in Table 5 and Table 6 are (1) indication of whether each lens surface is aspheric, (2) a radius of curvature of each lens surface, (3) a distance, (4) a d-line refractive index, and (5) an Abbe number, when a surface number is added to a lens surface in the order of light incidence/emission, regarding the image display device as the first surface. The following values comply with specifications of the projection optical system in which a focal length f is more than 4.3mm and less than 8.6mm, an F number is more than 1.5 and less than 2.4, and a viewing angle in the wide-angle end is 74.02°.

[Table 5]

| Surface No. Ii | Aspheric | Radius of Curvature Ri | Distance Di | d-line Refractive Index Ni | Abbe Number vi |
|---|---|---|---|---|---|
| 1 | | ∞ | 5.049 | | |
| 2 | | ∞ | 2.300 | 1.4584 | 67.8 |
| 3 | | ∞ | 34.000 | 1.5163 | 64.1 |
| 4 | | ∞ | 30.686 | | |
| 5 | | -157.290 | 20.000 | 1.8467 | 23.8 |
| 6 | | -72.477 | Variable | | |
| 7 | | 81.313 | 9.713 | 1.8467 | 23.8 |
| 8 | | 809.462 | Variable | | |
| 9 | | 252.417 | 11.201 | 1.6968 | 55.5 |
| 10 | | -44.952 | 7.000 | 1.6727 | 32.2 |
| 11 | | 25.705 | 13.649 | 1.5928 | 68.6 |
| 12 | | -79.370 | 0.673 | | |
| 13 | Aspheric | -70.513 | 2.000 | 1.6889 | 31.2 |
| 14 | Aspheric | 81.416 | 2.538 | | |
| 15 | | ∞ | 6.410 | | |
| 16 | | -31.401 | 1.500 | 1.6727 | 32.2 |
| 17 | | 97.355 | 10.272 | 1.7292 | 54.7 |
| 18 | | -45.295 | Variable | | |
| 19 | Aspheric | 70.563 | 15.546 | 1.5310 | 56.0 |
| 20 | Aspheric | -69.162 | Variable | | |
| 21 | Aspheric | 53.690 | 11.452 | 1.5310 | 56.0 |
| 22 | Aspheric | -156.878 | 1.481 | | |
| 23 | | -74.589 | 3.184 | 1.7283 | 28.3 |
| 24 | | 39.952 | Variable | | |
| 25 | | -35.354 | 6.727 | 1.4970 | 81.6 |
| 26 | | 297.860 | 15.668 | 1.8467 | 23.8 |
| 27 | | -61.228 | Variable | | |
| 28 | | 86.452 | 17.786 | 1.9108 | 35.3 |
| 29 | | -320.693 | 6.849 | | |

(continued)

| Surface No. Ii | Aspheric | Radius of Curvature Ri | Distance Di | d-line Refractive Index Ni | Abbe Number vi |
|---|---|---|---|---|---|
| 30 | Aspheric | -80.277 | 3.000 | 1.5310 | 56.0 |
| 31 | Aspheric | 133.326 | 14.268 | | |
| 32 | | ∞ | 50.305 | | |

[Table 6]

| Surface No. i | Aspheric | Radius of Curvature Ri | Distance Di | d-line Refractive Index Ni | Abbe Number vi |
|---|---|---|---|---|---|
| 33 | Aspheric | 114.878 | 15.000 | 1.5310 | 56.0 |
| 34 | Aspheric | -53.803 | 1.728 | | |
| 35 | | 120.699 | 14.654 | 1.8467 | 23.8 |
| 36 | | -123.736 | 5.307 | | |
| 37 | | 1750.286 | 3.500 | 1.6727 | 32.2 |
| 38 | | 30.415 | 16.411 | 1.5168 | 64.2 |
| 39 | | -87.440 | 0.258 | | |
| 40 | | 28.835 | 1.500 | 1.6727 | 32.2 |
| 41 | | 15.379 | 9.044 | 1.4970 | 81.6 |
| 42 | | 29.360 | 6.719 | | |
| 43 | | ∞ | 0.946 | | |
| 44 | Aspheric | -68.248 | 14.098 | 1.6889 | 31.2 |
| 45 | Aspheric | -18.017 | 0.660 | | |
| 46 | | -32.289 | 9.508 | 1.6477 | 33.8 |
| 47 | | 71.105 | 10.119 | 1.5928 | 68.6 |
| 48 | | -60.276 | 0.200 | | |
| 49 | Aspheric | 145.333 | 13.349 | 1.5310 | 58.0 |
| 50 | Aspheric | 566.865 | 0.233 | | |
| 51 | | 83.905 | 12.291 | 1.5928 | 68.6 |
| 52 | | 53.274 | 1.471 | | |
| 53 | | 59.464 | 12.687 | 1.7440 | 44.9 |
| 54 | | -1237.181 | 14.812 | | |
| 55 | Aspheric | -40.357 | 2.500 | 1.5310 | 56.0 |
| 56 | Aspheric | 112.668 | 20.223 | | |
| 57 | Aspheric | -27.430 | 11.880 | 1.5310 | 56.0 |
| 58 | Aspheric | -34.499 | 139.433 | | |
| 59 (Reflection Surface) | Aspheric | -92.014 | -530.000 | | |
| 60 | | ∞ | | | |

Shown in Table 7 is distance data in zooming. Di indicates a distance of an interval di between a surface having a surface number i and a surface having a surface number (i+1).

[Table 7]

| Distance | Wide-Angle End | Telephoto End |
|---|---|---|
| D6 | 0.200 | 67.943 |
| D8 | 31.809 | 27.317 |
| D18 | 0.200 | 30.022 |
| D20 | 12.934 | 0.200 |
| D24 | 23.901 | 25.547 |
| D27 | 82.184 | 0.200 |

Shown in Table 8 is aspheric data. The aspheric equation is the same as in the foregoing embodiment.

[Table 8]

| Surface No. | 13 | Surface No. | 21 | Surface No. | 33 | Surface No. | 49 |
|---|---|---|---|---|---|---|---|
| Conic Constant K | 0 | Conic Constant K | 0 | Conic Constant K | 0.691 | Conic Constant K | 0 |
| 4th-Order Coefficient A | -8.406E-07 | 4th-Order Coefficient A | -9.708E-08 | 4th-Order Coefficient A | 0.000E+00 | 4th-Order Coefficient A | -1.797E-06 |
| 6th-Order Coefficient B | 2.081 E-09 | 6th-Order Coefficient B | -3.490E-10 | 6th-Order Coefficient B | 0.000E+00 | 6th-Order Coefficient B | -2.942E-10 |
| 8th-Order Coefficient C | -6.706E-12 | 8th-Order Coefficient C | 9.556E-14 | 8th-Order Coefficient C | 0.000E+00 | 8th-Order Coefficient C | 4.840E-12 |
| 10th-Order Coefficient D | 3.891E-15 | 10th-Order Coefficient D | -3.399E-16 | 10th-Order Coefficient D | 0.000E+00 | 10th-Order Coefficient D | -2.201 E-15 |

| Surface No. | 14 | Surface No. | 22 | Surface No. | 34 | Surface No. | 50 |
|---|---|---|---|---|---|---|---|
| Conic Constant K | | Conic Constant K | 0 | Conic Constant K | 0 | Conic Constant K | 0 |
| 4th-Order Coefficient A | -7.078E-08 | 4th-Order Coefficient A | -3.451 E-06 | 4th-Order Coefficient A | 5.208E-06 | 4th-Order Coefficient A | -5.950E-06 |
| 6th-Order Coefficient B | 2.351 E-09 | 6th-Order Coefficient B | 5.063E-10 | 6th-Order Coefficient B | 0.000E+00 | 6th-Order Coefficient B | 1.856E-09 |
| 8th-Order Coefficient C | -5.590E-12 | 8th-Order Coefficient C | -2.204E-14 | 8th-Order Coefficient C | 0.000E+00 | 8th-Order Coefficient C | -2.578E-13 |
| 10th-Order Coefficient D | -1.558E-16 | 10th-Order Coefficient D | 1.852E-16 | 10th-Order Coefficient D | 0.000E+00 | 10th-Order Coefficient D | 1.026E-15 |

| Surface No. | 19 | Surface No. | 30 | Surface No. | 44 | Surface No. | 55 |
|---|---|---|---|---|---|---|---|
| Conic Constant K | | Conic Constant K | 0 | Conic Constant K | 0 | Conic Constant K | 0 |
| 4th-Order Coefficient A | -2.419E-07 | 4th-Order Coefficient A | 8.917E-06 | 4th-Order Coefficient A | -1.278E-05 | 4th-Order Coefficient A | 6.066E-07 |
| 6th-Order Coefficient B | -2.742E-11 | 6th-Order Coefficient B | 3.656E-10 | 6th-Order Coefficient B | -2.681 E-08 | 6th-Order Coefficient B | 8.898E-11 |
| 8th-Order Coefficient C | 4.861E-13 | 8th-Order Coefficient C | -2.308E-13 | 8th-Order Coefficient C | -1.603E-10 | 8th-Order Coefficient C | 6.452E-14 |

(continued)

| Surface No. | 19 | Surface No. | 30 | Surface No. | 44 | Surface No. | 55 |
|---|---|---|---|---|---|---|---|
| 10th-Order Coefficient D | -1.785E-16 | 10th-Order Coefficient D | 47.150E-17 | 10th-Order Coefficient D | 9.917E-13 | 10th-Order Coefficient D | -2.783E-17 |
| Surface No. | 20 | Surface No. | 31 | Surface No. | 45 | Surface No. | 56 |
| Conic Constant K | 0 | Conic Constant K | 0 | Conic Constant K | 0 | Conic Constant K | 0 |
| 4th-Order Coefficient A | 9.073E-07 | 4th-Order Coefficient A | 6.797E-07 | 4th-Order Coefficient A | 6.450E-06 | 4th-Order Coefficient A | 2.860E-08 |
| 6th-Order Coefficient B | -1.126E-10 | 6th-Order Coefficient B | 5.078E-10 0 | 6th-Order Coefficient B | 1.905E-09 | 6th-Order Coefficient B | 1.393E-13 |
| 8th-Order Coefficient C | 6.775E-13 | 8th-Order Coefficient C | -4.494E-14 | 8th-Order Coefficient C | 4.246E-11 | 8th-Order Coefficient C | -5.334E-15 |
| 10th-Order Coefficient D | -1.097E-15 | 10th-Order Coefficient D | -2.586E-17 | 10th-Order Coefficient D | 8.139E-14 | 10th-Order Coefficient D | -7.690E-18 |

In Table 9, aspheric data of surface numbers 57, 58, and 59 is shown. In this case, the aspheric equation is given by $Z=ch^2/(1+SQRT\{1-(1+k)c^2H^2\})+C3h^3+C4h^4+C5h^5+C6h^6+C7h7+C8h^8+C9h^9+C10h^{10}$.

[Table 9]

| Surface No. | 57 | Surface No. | 58 | Surface No. | 59 |
|---|---|---|---|---|---|
| Conic Constant K | -0.769 | Conic Constant K | -0.480 | Conic Constant K | -0.724 |
| 3rd-Order Coefficient C3 | 1.391 E-07 | 3rd-Order Coefficient C3 | 2.766E-06 | 3rd-Order Coefficient C3 | -8.575E-07 |
| 4th-Order Coefficient C4 | -1.100E-06 | 4th-Order Coefficient C4 | -1.733E-06 | 4th-Order Coefficient C4 | 5.165E-08 |
| 5th-Order Coefficient C5 | 5.060E-10 | 5th-Order Coefficient C5 | 3.575E-11 | 5th-Order Coefficient C5 | 7.513E-12 |
| 6th-Order Coefficient C6 | 1.212E-08 | 6th-Order Coefficient C6 | 3.000E-09 | 6th-Order Coefficient C6 | -3.486E-12 |
| 7th-Order Coefficient C7 | 2.113E-14 | 7th-Order Coefficient C7 | -2.119E-13 | 7th-Order Coefficient C7 | -1.933E-16 |
| 8th-Order Coefficient C8 | -5.383E-12 | 8th-Order Coefficient C8 | 1.252E-13 | 8th-Order Coefficient C8 | 7.890E-17 |
| 9th-Order Coefficient C9 | 2.364E-17 | 9th-Order Coefficient C9 | 3.483E-16 | 9th-Order Coefficient C9 | -4.177 E-20 |
| 10th-Order Coefficient C10 | 7.770E-16 | 10th-Order Coefficient C10 | 8.409E-18 | 10th-Order Coefficient C10 | 2.853E-22 |

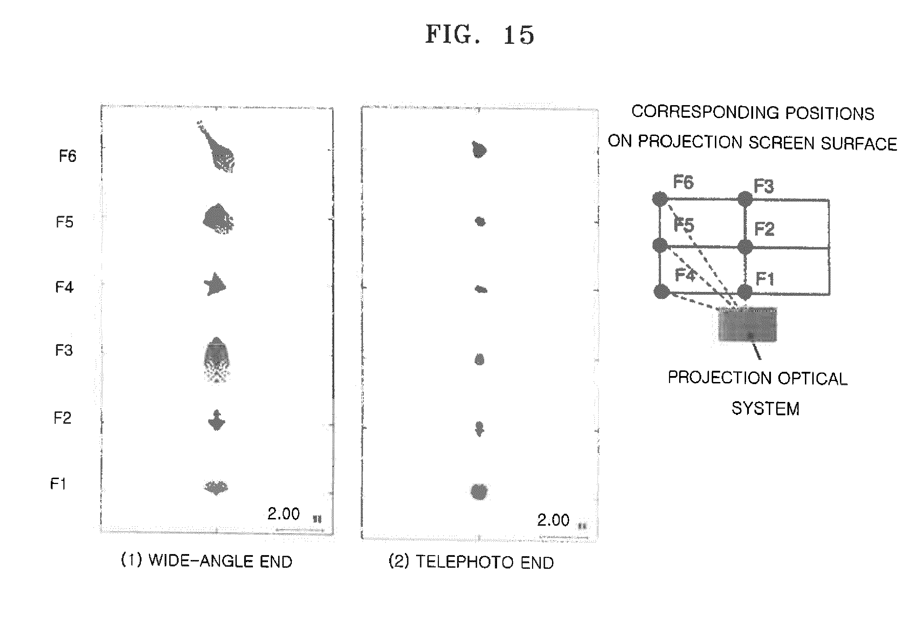

FIG. 15 is a spot diagram at a wavelength of 520nm on a screen surface in a projection optical system according to another embodiment of the present invention. In FIG. 15, the left side corresponds to the wide-angle end, and the center corresponds to the telephoto end. F1 through F6 indicate positions on the screen surface as shown in the right side of FIG. 15.

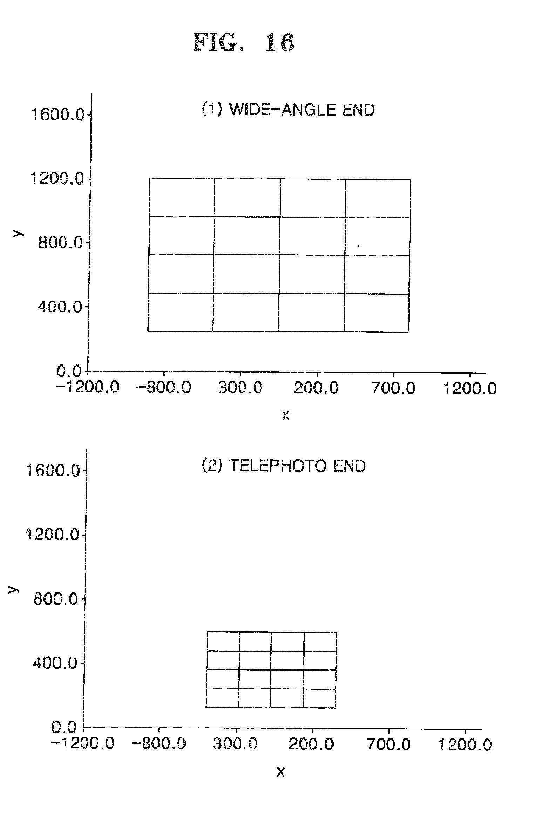

FIG. 16 is a diagram showing a distortion aberration in a projection optical system according to an embodiment of the present invention. In FIG. 16, (1) corresponds to the wide-angle end, and (2) corresponds to the telephoto end.

In the current embodiment, the optical axis of the first optical system and the optical axis of the second optical system approximately coincide with each other, thereby reducing an error in assembly, caused by mismatch of the optical axes.

While the present invention has been particularly shown and described with reference to exemplary embodiments thereof, it will be understood by those of ordinary skill in the art that various changes in form and details may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A projection optical system comprising:

   a first optical system for zooming an image formed by an image display device to form a first intermediate image;
   a second optical system for enlarging the first intermediate image to form a second intermediate image; and
   a reflection optical system for reflecting light which forms the second intermediate image,
   wherein an optical axis of the first optical system translates parallel with respect to an optical axis of the second optical system in a direction perpendicular to the optical axis of the first optical system, or the optical axis of the first optical system and the optical axis of the second optical system are approximately on the same straight line.

2. The projection optical system of claim 1, wherein an optical axis of the first optical system translates parallel with respect to an optical axis of the second optical system in a direction perpendicular to the optical axis of the first optical system, and the optical axis of the first optical system coincides with a central normal of the image display device.

3. The projection optical system of claim 1, wherein an optical axis of the first optical system translates parallel with respect to an optical axis of the second optical system in a direction perpendicular to the optical axis of the first optical system, and the optical axis of the first optical system passes through an inside or vicinity of the image display device.

4. The projection optical system of claim 1, wherein the optical axis of the first optical system and the optical axis of the second optical system are approximately on the same straight line, and a central normal of the image display device translates parallel with respect to an optical axis of the first optical system in a direction perpendicular to the optical axis of the first optical system.

5. The projection optical system of any one of claims 1 to 4, further comprising a plane mirror for reflecting light emitted from the first optical system and causing the reflected light to be incident to the second optical system.

6. The projection optical system of any one of claims 1 to 5, wherein the reflection optical system comprises a concave mirror.

7. The projection optical system of claim 6, wherein an aberration of the first optical system and an aberration of the second optical system and the reflection optical system comprising the concave mirror are offset.

8. The projection optical system of any one of claims 1 to 7, wherein the first optical system is an enlarging/zooming optical system.

**9.** An image projection device comprising a projection optical system according to any one of claims 1 to 8.

FIG. 1

(a)

101

104

105

103

100

(b)

101

100

103

(c)

101

104

105

103

100

FIG. 2

FIG. 3

# FIG. 4A

(WIDE-ANGLE END)

FIG. 4B

FIRST OPTICAL SYSTEM

SECOND OPTICAL SYSTEM

REFLECTION OPTICAL SYSTEM

(WIDE-ANGLE END)

(TELEPHOTO END)

# FIG. 5

PROJECTION
PLANE

PROJECTION
PLANE

(1) WIDE-ANGLE END

(2) TELEPHOTO END

# FIG. 6

F6
F5
F4
F3
F2
F1

2.00 m

(1) WIDE-ANGLE END

2.00 m

(2) TELEPHOTO END

CORRESPONDING POSITIONS
ON PROJECTION SCREEN SURFACE

F6    F3
F5    F2
F4    F1

PROJECTION OPTICAL
SYSTEM

EP 2 456 207 A2

# FIG. 7

(1) WIDE-ANGLE END

(2) TELEPHOTO END

FIG. 8

FIG. 9

FIG. 10

FIG. 11

FIG. 12

FIG. 13A

FIRST OPTICAL SYSTEM

SECOND OPTICAL SYSTEM

REFLECTION OPTICAL SYSTEM

(WIDE-ANGLE END)

REFLECTION OPTICAL SYSTEM

SECOND OPTICAL SYSTEM

FIRST OPTICAL SYSTEM

(TELEPHOTO END)

# FIG. 13B

FIRST OPTICAL SYSTEM

SECOND OPTICAL SYSTEM

REFLECTION OPTICAL SYSTEM

(WIDE-ANGLE END)

(TELEPHOTO END)

FIG. 14

PROJECTION
PLANE

PROJECTION
PLANE

(1) WIDE-ANGLE END

(2) TELEPHOTO END

# FIG. 15

(1) WIDE-ANGLE END

(2) TELEPHOTO END

CORRESPONDING POSITIONS
ON PROJECTION SCREEN SURFACE

PROJECTION OPTICAL
SYSTEM

EP 2 456 207 A2

FIG. 16

(1) WIDE-ANGLE END

(2) TELEPHOTO END